# EUROPÄISCHE PATENTSCHRIFT

(11) **EP 2 353 839 B1**
(45) Veröffentlichungstag und Bekanntmachung des Hinweises auf die Patenterteilung: **10.12.2014**
(21) Anmeldenummer: 10151776.1
(22) Anmeldetag: 27.01.2010
(51) Int. Cl.: B29C 47/76, B29C 47/36, B29C 47/50, B29C 47/40, B29C 47/92

(54) **VERFAHREN UND AUFBEREITUNGSANLAGE ZUR ENTGASUNG VON POLYMERSCHMELZEN**
METHOD AND PLANT FOR DEGASING POLYMER MELTS
PROCÉDÉ ET INSTALLATION POUR DÉGAZAGE POLYMÈRES FONDUS

(43) Veröffentlichungstag der Anmeldung: 10.08.2011
(73) Patentinhaber: Coperion GmbH, 70469 Stuttgart (DE)
(72) Erfinder: Lechner, Frank, 76131 Karlsruhe (DE); Conrad, Ulrich, Dr., 31008 Elze (DE)
(74) Vertreter: Rau, Manfred

(56) Entgegenhaltungen:
- EP-A1- 0 336 520
- EP-A1- 1 473 137
- EP-A1- 1 800 724
- WO-A1-02/057065
- WO-A2-2009/136904
- AT-B- 411 235
- DD-A1- 231 029
- DE-U1- 29 809 023
- GB-A- 1 140 693
- JP-A- H0 659 440
- JP-A- 60 124 232
- JP-A- 2002 307 530
- US-A- 3 346 919
- US-A- 5 804 111
- US-A1- 2005 049 362

## Beschreibung

Die Erfindung betrifft ein Verfahren zur Entgasung von Polymerschmelzen. Ferner betrifft die Erfindung eine Aufbereitungsanlage zur Entgasung von Polymerschmelzen gemäß dem Oberbegriff des Anspruchs 12.

Das Entgasen von Polymerschmelzen zur Verbesserung der Polymerqualität ist bei der industriellen Herstellung von Kunststoffen üblich. Aus den Polymerschmelzen werden flüchtige Bestandteile, wie Monomere, Oligomere, für die Polymerisation erforderliche Hilfsmittel sowie unerwünschte Nebenprodukte entgast, die die Polymerqualität beeinträchtigen. Typische Hilfsmittel sind beispielsweise Lösungsmittel oder Suspensionsmittel. Durch das Entgasen können insbesondere die optischen und mechanischen Eigenschaften verbessert werden.

Aus der EP 1 617 985 B1 (entsprechend US 2006/0245294 A1)bzw. der EP 1 473 137 A1 ist eine Aufbereitungsanlage sowie ein Verfahren zur Entgasung von bimodalen Polyolefinen bekannt. Bei der Aufbereitungsanlage sind zwei gleichläufige Zweiwellen-Extruder hintereinander angeordnet, wobei der in Förderrichtung gesehen zweite Extruder eine Entgasungszone zum Entgasen der aufzubereitenden Polyolefine aufweist. Nachteilig bei dieser Aufbereitungsanlage ist, dass die Entgasungsleistung, also die Höhe des entgasten Anteils an unerwünschten flüchtigen Bestandteilen gering ist.

Aus der EP 0 861 717 A1 (entsprechend US 6,024,479 A) ist ein Verfahren und eine Extrusionsvorrichtung zur Verarbeitung stark ausgasender Materialien bekannt. Die Extrusionsvorrichtung weist einen Hauptextruder sowie zwei seitlich in diesen mündende Nebenextruder auf, so dass der in einer Verdampfungszone des Hauptextruders entstehende Gasstrom in mindestens drei Teilströme aufgeteilt wird, die dann aus den Extrudern abgeführt werden. Nachteilig ist, dass bei dieser Extrusionsvorrichtung der Materialdurchsatz im Verhältnis zum technischen Aufwand gering ist.

Die WO 2009/136 904 A2 offenbart eine Aufbereitungsanlage für Polymerschmelzen, die einen Hauptextruder und zwei Seitenextruder aufweist. Die Seitenextruder weisen jeweils eine Entgasungszone auf und münden seitlich in den Hauptextruder. Der Hauptextruder weist mehrere Entgasungszonen mit zugehörigen Entgasungsöffnungen auf.

In der US 5 804 111 A ist eine Aufbereitungsanlage zur Entgasung von festen Kunststoffen offenbart, die einen ersten Extruder aufweist, der seitlich in einen zweiten Extruder mündet. Endseitig des ersten Extruders ist ein Drucksensor angeordnet, mittels dem der Materialfluss zwischen den Extrudern gesteuert wird, sodass der Wirkungsgrad der Entgasung in dem zweiten Extruder verbessert wird.

Aus der US 3 346 919, der DD 231 029 A1 und der JP 60 124232 A sind Aufbereitungsanlagen bekannt, die zwischen zwei Extrudern eine Übergabezone mit einer Lochplatte aufweisen. Das Material wir durch die Lochplatte gepresst und in eine Vielzahl von Fäden aufgeteilt, wodurch eine Entgasung erzielt wird.

Aus der EP 0 336 520 A1 ist eine Aufbereitungsanlage für Polymere bekannt, die einen ersten Extruder und einen nachgeordneten zweiten Extruder aufweist. In beiden Extrudern findet eine Entgasung statt. Die flüchtigen Bestandteile werden mittels Vakuumpumpen aus der Verbindungsleitung zwischen den Extrudern abgesaugt.

Aus der JP 2002 307 530 A ist eine Aufbereitungsanlage mit zwei Extrudern bekannt, die über eine Zahnradpumpe, eine Übergangsleitung, ein Ventil, eine Lochplatte und einen Entgasungstank miteinander verbunden sind. Aufzubreitendes Kunststoffmaterial wird in den ersten Extruder gegeben und dort aufgeschmolzen, wobei in einem Zuführbereich in überkritisches Fluid in den ersten Extruder zugegeben und dort mit dem Kunststoffmaterial vermischt wird. Zur Entgasung der aus dem ersten Extruder austretenden Kunststoffschmelze wird diese durch die Lochplatte und den Entgasungstank gerührt, in dem flüchtige Bestandteile austreten und über eine Saugeinheit entweichen. Anschließend strömt die Kunststoffschmelze in den zweiten Extruder, der zur weiteren Ergasung eine Entgasungszone aufweist.

Aus der JP 6 059 440 A ist eine Aufbereitungsanlage zur Entgasung eine fotosensitiven Materials bekannt. Die Aufbereitungsanlage weist einen ersten Extruder und einen nachgeordneten zweiten Extruder auf, die durch eine Übergangsleitung miteinander verbunden sind. Die Extruder weisen jeweils mehrere Entgasungszonen mit zugehörigen Entgasungsöffnungen auf, aus denen die entgasten Bestandteile mittels einer Vakuumpumpe abgesaugt werden.

Aus der AT 411 235 B ist eine Vorrichtung zur Aufbereitung von thermoplastischem Kunststoffmaterial bekannt, die einen ersten Aufnahmebehälter und einen nachgeordneten zweiten Aufnahmebehälter aufweist. Beide Behälter sind durch einen Verbindungskanal miteinander verbunden, wobei der Verbindungskanal zwei Schieber zur Herstellung eines vakuumdichten Abschlusses zwischen den beiden Behältern aufweist. Die beiden Behälter sowie die durch die Schieber begrenzte Schleusenkammer sind an eine Evakuiereinrichtung angeschlossen.

Aus der GB 1 140 693 A ist ein zweistufiger Extruder bekannt. Das aufzubereitende Material wird über einen Schieber in die erste Extruderstufe gegeben, die von der zweiten Extruderstufe durch Stauelemente getrennt ist. Am Ende der ersten Extruderstufe führt eine Rohrleitung über die Stauelemente hinweg zu der zweiten Extruderstufe. In der Rohrleitung ist eine Lochplatte zur Entgasung des Materials angeordnet.

Aus der DE 298 09 023 U1 ist eine Tandemanordnung aus zwei hintereinander angeordneten Extrudern bekannt, die über eine Drosseleinrichtung und eine Entgasungseinheit miteinander verbunden sind.

Der Erfindung liegt die Aufgabe zugrunde, ein Verfahren zur Entgasung von Polymerschmelzen zu schaffen, das eine hohe Entgasungsleistung in Verbindung mit einem hohen Polymerdurchsatz ermöglicht.

Diese Aufgabe wird durch ein Verfahren mit den Merkmalen des Anspruchs 1 gelöst. Der erste Extruder bildet eine erste Entgasungsstufe und der zweite Extruder eine nachgeordnete zweite Entgasungsstufe aus. Durch diesen zweistufigen Aufbau der Aufbereitungsanlage kann eine hohe Entgasungsleistung bei gleichzeitig hohem Polymerdurchsatz erzielt werden. Bei dem ersten Extruder wird die Drehzahl hoch gewählt, da der Energieeintrag durch die niedrige Viskosität der zu entgasenden Polymerschmelze gering ist. Der Anteil an flüchtigen Bestandteilen wird hierdurch in den ersten Entgasungszonen erheblich verringert. Die durch das Entgasen aus der Polymerschmelze abgeführte Energie wird der Polymerschmelze über die ersten Behandlungselemente, oder eine externe Beheizung, wieder zugeführt. Weist die Polymerschmelze beim Eintritt in den ersten Extruder einen Anteil flüchtiger Bestanteile von 10 bis 80 Gew.-% auf, so können diese bis zum Austritt aus dem ersten Extruder auf einen Anteil von 2 bis 20 Gew.-% reduziert werden. Die Polymerschmelze wird vor dem Eintritt in den zweiten Extruder unter Druck einer Entgasungseinheit zugeführt, die in der Übergabezone angeordnet ist. Die Entgasungseinheit ist als Strang-Entgasungseinheit ausgebildet. In der Entgasungseinheit entweichen weitere flüchtige Bestandteile aus der Polymerschmelze, wodurch die Entgasungsleistung verbessert und optimiert wird. Die abgetrennten flüchtigen Bestandteile können durch eigene Entgasungsöffnungen der Entgasungseinheit und/oder durch die Entgasungsöffnungen des zweiten Extruders entweichen. Durch das Entgasen der flüchtigen Bestandteile wird die Viskosität der Polymerschmelze erhöht, d. h. die Polymerschmelze wird zähflüssiger. Um eine thermische Beschädigung der Polymerschmelze beim weiteren Entgasen zu vermeiden, wird der nachgeordnete zweite Extruder mit einer geringeren Drehzahl als der erste Extruder betrieben, um einen zu hohen Energieeintrag im zweiten Extruder zu vermeiden. Dadurch, dass der zweite Extruder Behandlungselemente mit einem größeren Außendurchmesser als der erste Extruder aufweist, kann dieser trotz der geringeren Drehzahl die zugeführte Polymerschmelze weiter entgasen, ohne dass sich diese in der Übergabezone staut. In den zweiten Entgasungszonen werden aus der Polymerschmelze weitere flüchtige Bestandteile entgast, wobei die durch die Entgasung aus der Polymerschmelze abgeführte Energie über die zweiten Behandlungselemente wieder zugeführt werden kann. Die Polymerschmelze weist beim Austritt aus dem zweiten Extruder einen Anteil an flüchtigen Bestandteilen von beispielsweise weniger als 10 000 ppm, insbesondere von weniger als 5 000 ppm auf. Der erste Extruder bildet somit eine erste Stufe und der zweite Extruder eine zweite Stufe des erfindungsgemäßen Entgasungsverfahrens. Die Extruder sind vorzugsweise als dichtkämmende, gleichläufige Zweiwellen-Extruder ausgebildet. Der erste Extruder wird vorzugsweise mit einer konstanten Drehzahl betrieben, wohingegen die Drehzahl des zweiten Extruders regelbar ist.

Mittels der einstellbaren Drossel erfolgt eine Steuerung bzw. Regelung des Energieeintrages in die Polymerschmelze im ersten Extruder. Dies ist insbesondere dann vorteilhaft, wenn dieser mit einer im Wesentlichen konstanten Drehzahl betrieben wird, da die Verweilzeit der Polymerschmelze im ersten Extruder durch Einstellen der Stellung der Drossel und somit der Energieeintrag einfach veränderbar ist. Die Entgasungseinheit gewährleistet auf einfache Weise eine wirkungsvolle Entgasung. Die Entgasungseinheit wird auch als Strang-Entgasungseinheit bezeichnet, da die durch die Lochplatte geführte Polymerschmelze im nachgeordneten Freiraum strangförmig ausgebildet und eine im Vergleich zu der Polymerschmelze vor der Lochplatte größere Oberfläche aufweist. Flüchtige Bestandteile können hierdurch auf einfache Weise aus der Polymerschmelze austreten und von dieser getrennt werden. Hierzu muss gewährleistet sein, dass der nachgeordnete Freiraum vorzugsweise teilgefüllt ist und sich die Polymerschmelze nicht in dem Freiraum staut und diesen vollständig füllt. Der der Entgasungseinheit nachgeordnete Extruder muss dementsprechend mit einer ausreichend hohen Drehzahl betrieben werden, so dass die Polymerschmelze nach der Entgasungseinheit in einer ausreichenden Menge abgeführt wird und sich die Polymerschmelze nicht in den Freiraum zurückstaut, bis dieser vollständig gefüllt ist.

Bei den Polymerschmelzen kann es sich um Polymerlösungen oder Polymersuspensionen handeln. Zu entgasende flüchtige Bestandteile sind beispielsweise Monomere, Oligomere, Hilfsmittel, insbesondere Suspensions- und Lösungsmittel sowie unerwünschte Neben- und Reaktionsprodukte.

Ein Verfahren nach Anspruch 2 erhöht die Entgasungsleistung. Die dem ersten Extruder vorgeordnete Entgasungseinheit ist beispielsweise als Strang-Entgasungseinheit und/oder als Flash-Ventil ausgebildet.

Ein Verfahren nach Anspruch 3 ermöglicht ein einfaches Zuführen der Polymerschmelze in die dem ersten Extruder vorgeordnete Entgasungseinheit. Die Schmelzepumpe ist beispielsweise als Zahnradpumpe ausgebildet.

Ein Verfahren nach Anspruch 4 gewährleistet auf einfache Weise eine wirkungsvolle Entgasung.

Ein Verfahren nach Anspruch 5 ermöglicht auf einfache Weise eine spontane Trennung der Polymerschmelze und den flüchtigen Bestandteilen. Die Entspannungseinheit wird auch als Flash-Ventil bezeichnet. Bei der hiermit durchgeführten Flash-Entgasung wird die Polymerschmelze unter Druck über den Siedpunkt des zu entgasenden flüchtigen Bestandteils erhitzt und in den Extruder bzw. die Strang-Entgasungseinheit hinein entspannt. Hierbei kommt es zu einer spontanen Trennung der Polymerschmelze und des bzw. der niedermolekularen Bestandteile. Insbesondere kann die dem ersten Extruder vorgeordnete Entgasungseinheit als Flash-Ventil ausgebildet sein.

Ein Verfahren nach Anspruch 6 ist einfach durchführbar, da die in den Entgasungseinheiten abgetrennten flüchtigen Bestandteile durch die ohnehin vorhandenen Entgasungsöffnungen der Entgasungszonen entweichen können.

Ein Verfahren nach einem der Ansprüche 7 bis 11 ermöglicht eine Optimierung der Entgasung in Abhängigkeit der Polymerschmelze und/oder der zu entgasenden flüchtigen Bestandteile.

Der Erfindung liegt ferner die Aufgabe zugrunde, eine Aufbereitungsanlage zur Entgasung von Polymerschmelzen zu schaffen, mit der eine hohe Entgasungsleistung in Verbindung mit einem hohen Polymerdurchsatz erzielbar ist.

Diese Aufgabe wird durch eine Aufbereitungsanlage mit den Merkmalen des Anspruchs 12 gelöst. Die Vorteile der erfindungsgemäßen Aufbereitungsanlage entsprechen den bereits beschriebenen Vorteilen des erfindungsgemäßen Verfahrens. Die mittels der Steuereinheit einstellbare Drossel ermöglicht auf einfache Weise den Energieeintrag in die Polymerschmelze im ersten Extruder zu steuern bzw. zu regeln. Insbesondere kann die Aufbereitungsanlage auch mit den Merkmalen der Ansprüche 2 bis 11 weitergebildet sein.

Eine Aufbereitungsanlage nach Anspruch 13 weist eine erhöhte Entgasungsleistung auf.

Weitere Merkmale, Vorteile und Einzelheiten der Erfindung ergeben sich aus der nachfolgenden Beschreibung mehrerer Ausführungsbeispiele. Es zeigen:
- Fig. 1: eine Draufsicht auf eine Aufbereitungsanlage gemäß einem ersten Ausführungsbeispiel mit aufgebrochen dargestellten Extrudern,
- Fig. 2: eine Seitenansicht der Aufbereitungsanlage gemäß dem Sichtpfeil II in Fig. 1 mit aufgebrochen dargestellten Extrudern,
- Fig. 3: einen Querschnitt durch einen ersten Extruder gemäß der Schnittlinie III-III in Fig. 2,
- Fig. 4: einen Querschnitt durch einen zweiten Extruder gemäß der Schnittlinie IV-IV in Fig. 1,
- Fig. 5: eine Seitenansicht entsprechend Fig. 2 einer Aufbereitungsanlage gemäß einem zweiten Ausführungsbeispiel, und
- Fig. 6: eine Seitenansicht entsprechend Fig. 2 einer Aufbereitungsanlage gemäß einem dritten Ausführungsbeispiel.

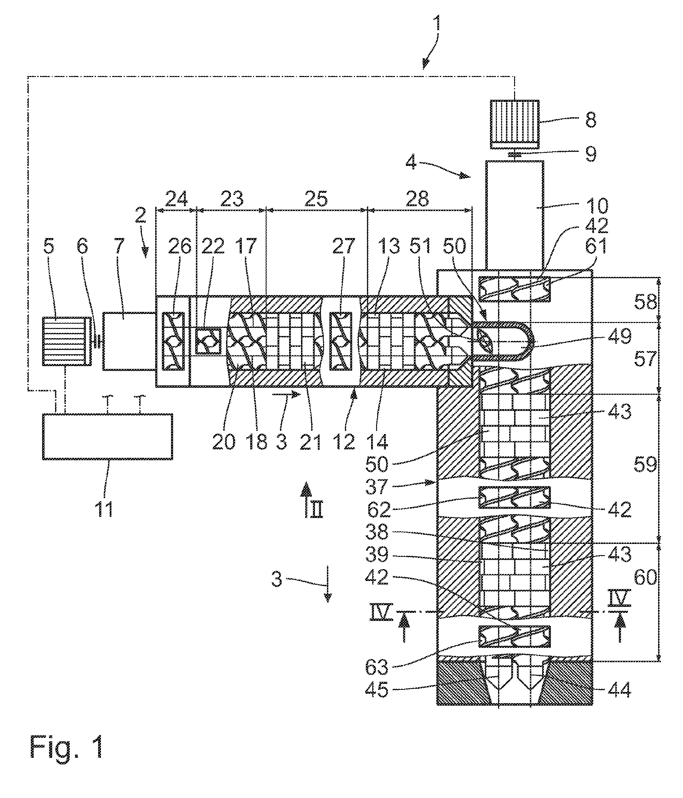

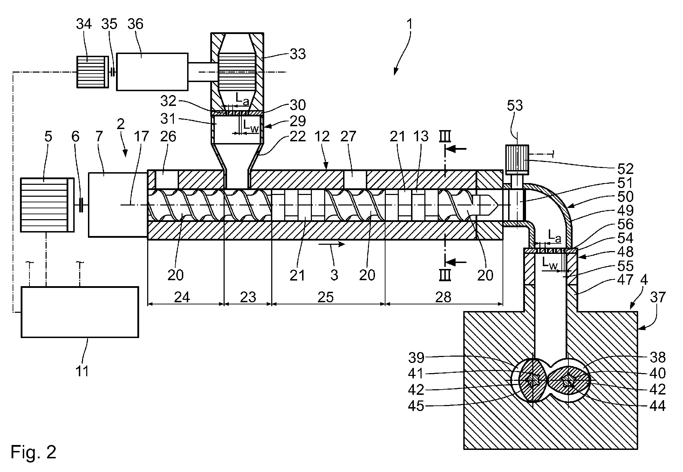

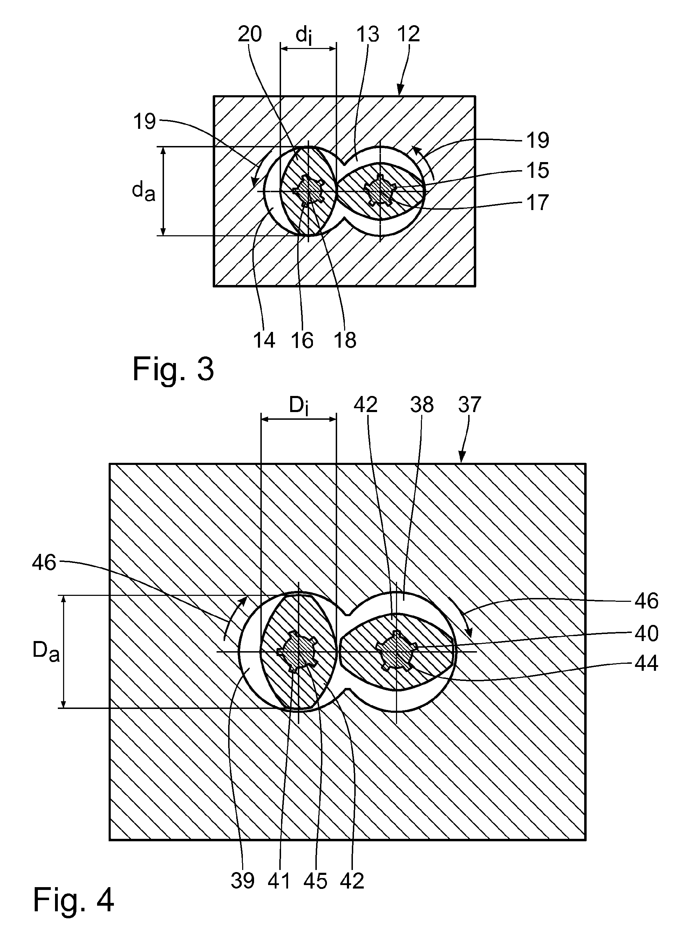

Nachfolgend wird unter Bezugnahme auf die Figuren 1 bis 4 ein erstes Ausführungsbeispiel der Erfindung beschrieben. Eine Aufbereitungsanlage 1 weist einen ersten Extruder 2 und einen in einer Förderrichtung 3 nachgeordneten zweiten Extruder 4 auf. Der erste Extruder 2 ist oberhalb des zweiten Extruders 4 angeordnet. Der erste Extruder 2 wird mittels eines ersten Antriebsmotors 5 über eine erste Kupplung 6 und ein erstes Getriebe 7 angetrieben. Entsprechend wird der zweite Extruder 4 mittels eines zweiten Antriebsmotors 8 über eine zweite Kupplung 9 und ein zweites Getriebe 10 angetrieben. Die Steuerung der Antriebsmotoren 5 und 8 erfolgt über eine Steuereinheit 11.

Der erste Extruder 2 weist ein Gehäuse 12 auf, in dem zwei erste Gehäusebohrungen 13, 14 ausgebildet sind, die parallel zueinander verlaufen und in Form einer liegenden Acht ineinander greifen. In diesen Gehäusebohrungen 13, 14 sind zwei erste Wellen 15, 16 angeordnet, die an das erste Getriebe 7 angekuppelt sind. Die ersten Wellen 15, 16 werden um parallel zueinander verlaufende erste Drehachsen 17, 18 gleichsinnig, also in gleicher Drehrichtung 19, angetrieben.

An den ersten Wellen 15, 16 sind erste Behandlungselemente in Form von ersten Schneckenelementen 20 und ersten Knetelementen 21 angeordnet. Die Behandlungselemente 20, 21 sind dichtkämmend ausgebildet und selbstreinigend. Die Behandlungselemente 20, 21 weisen einen ersten Kern-Durchmesser dᵢ und einen ersten Außendurchmesser dₐ auf.

Der erste Extruder 2 weist einen Zuführtrichter 22 auf, an den sich in Förderrichtung 3 eine Einzugszone 23 mit Schneckenelementen 20 anschließt. Der Einzugszone 23 vor- und nachgeordnet sind erste Entgasungszonen 24, 25 mit zugehörigen ersten Entgasungsöffnungen 26, 27. Die Entgasungszone 24, in der an den Wellen 15, 16 Schneckenelemente 20 angeordnet sind, ist als sogenannte Rückwärts-Entgasungszone ausgebildet und der Einzugszone 23 in Richtung zu dem Getriebe 7 vorgeordnet. Demgegenüber ist die Entgasungszone 25, in der an den Wellen 15, 16 Knetelemente 21 und nachgeordnete Schneckelemente 20 angeordnet sind, als Vorwärts-Entgasunsgzone ausgebildet, die der Einzugszone 23 in Förderrichtung 3 nachgeordnet ist. An die Entgasungszone 25 schließt sich eine Förderzone 28 an, in der an den Wellen 15, 16 Knetelemente 21 und nachfolgende Schneckenelemente 20 angeordnet sind.

Dem ersten Extruder 2 ist in Förderrichtung 3 eine erste Entgasungseinheit 29 vorgeordnet. Die Entgasungseinheit 29 ist mit dem Zuführtrichter 22 verbunden und als rohrförmige Strang-Entgasungseinheit ausgebildet. Die Entgasungseinheit 29 weist eine erste Lochplatte 30 und einen in Förderrichtung 3 nachgeordneten ersten Freiraum 31 auf. Die Lochplatte 30 ist dem Freiraum 31 in Richtung der Schwerkraft vorgeordnet. Die Lochplatte 30 weist eine Vielzahl von ersten Löchern 32 mit einer Lochweite L_{w} von 0,1 bis 20 mm und einen Lochabstand Lₐ von 0,1 bis 50 mm auf.

Der Entgasungseinheit 29 ist in Förderrichtung 3 eine Schmelzepumpe 33 vorgeordnet, die als Zahnradpumpe ausgebildet ist und von einem dritten Antriebsmotor 34 über eine dritte Kupplung 35 und ein drittes Getriebe 36 angetrieben wird. Der Antriebsmotor 34 wird mittels der Steuereinheit 11 angesteuert.

Der zweite Extruder 4 weist ebenfalls ein Gehäuse 37 auf, in dem zwei zweite Gehäusebohrungen 38, 39 ausgebildet sind, die parallel zueinander verlaufen und in Form einer liegenden Acht ineinander greifen. In diesen Gehäusebohrungen 38, 39 sind zwei zweite Wellen 40, 41 angeordnet, die an das zweite Getriebe 10 angekuppelt sind. An den zweiten Wellen 40, 41 sind zweite Behandlungselemente in Form von zweiten Schneckenelementen 42 und zweiten Knetelementen 43 angeordnet. Die Wellen 40, 41 werden um parallel zueinander verlaufende zweite Drehachsen 44, 45 gleichsinnig, also in gleicher Drehrichtung 46 angetrieben. Die zweiten Behandlungselemente 42, 43 sind dichtkämmend ausgebildet und selbstreinigend. Die Behandlungselemente 42, 43 weisen einen zweiten Kern-Durchmesser Dᵢ und einen zweiten Außendurchmesser Dₐ auf.

Der zweite Extruder 4 weist in Förderrichtung 3 nach dem zweiten Getriebe 10 einen Zuführstutzen 47 auf, der über eine zweite Entgasungseinheit 48 und einen Rohrkrümmer 49 mit der Förderzone 28 des ersten Extruders 2 verbunden ist. Die Entgasungseinheit 48 ist dem Rohrkrümmer 49 in Förderrichtung 3 nachgeordnet. Die Entgasungseinheit 48 und der Rohrkrümmer 49 bilden eine die Extruder 2, 4 verbindende Übergabezone 50 aus. An einem dem ersten Extruder 2 zugewandten Ende des Rohrkrümmers 49 ist in der Übergabezone 50 eine einstellbare Drossel 51 angeordnet, die mittels eines Drossel-Antriebsmotors 52 um eine Drehachse 53 verschwenkbar ist, so dass der freie Rohrquerschnitt des Rohrkrümmers 49 veränderbar ist. Der Drossel-Antriebsmotor 52 wird mittels der Steuereinheit 11 angesteuert. Die zweite Entgasungseinheit 48 ist der Drossel 51 in Förderrichtung 3 nachgeordnet.

Die zweite Entgasungseinheit 48 ist ebenfalls als rohrförmige Strang-Entgasungseinheit ausgebildet. Die Entgasungseinheit 48 weist eine zweite Lochplatte 54 mit einem in Förderrichtung 3 nachgeordneten zweiten Freiraum 55 auf. Die zweite Lochplatte 54 weist eine Vielzahl von zweiten Löchern 56 auf, die eine Lochweite L_{w} und einen Lochabstand Lₐ entsprechend den Löchern 32 der ersten Lochplatte 30 haben.

An den Zuführstutzen 47 schließt sich in Förderrichtung 3 eine Einzugszone 57 an, in der die zweiten Wellen 40, 41 mit Schneckenelementen 42 versehen sind. Der Einzugszone 57 sind mehrere zweite Entgasungszonen 58, 59, 60 mit zugehörigen zweiten Entgasungsöffnungen 61, 62, 63 vor- und nachgeordnet. Die Entgasungszone 58 ist als sogenannte Rückwärts-Entgasungszone ausgebildet und der Einzugszone 57 in Richtung zu dem zweiten Getriebe 10 vorgeordnet. In der Entgasungszone 58 sind die zweiten Wellen 40, 41 mit Schneckenelementen 42 besetzt. Die Entgasungszonen 59, 60 sind als Vorwärts-Entgasungszonen ausgebildet, wobei die zweiten Wellen 40, 41 jeweils mit Knetelementen 43 und nachgeordneten Schneckenelementen 42 versehen sind.

Die Steuereinheit 11 ist derart ausgebildet, dass eine Drehzahl n₂ der zweiten Wellen 40, 41 niedriger als eine Drehzahl n₁ der ersten Wellen 14, 15 im Betrieb der Aufbereitungsanlage 1 ist. Der Außendurchmesser dₐ der ersten Behandlungselemente 20, 21 ist kleiner dem Außendurchmesser Dₐ der zweiten Behandlungselemente 42, 43. Für das Verhältnis der Außendurchmesser dₐ zu Dₐ gilt: 0,3 ≤ dₐ/Dₐ < 1,0, insbesondere 0,3 ≤ dₐ/Dₐ ≤ 0,8 und insbesondere 0,5 ≤ dₐ/Dₐ ≤0,8. Für das Durchmesserverhältnis dₐ/dᵢ der ersten Behandlungselemente 20, 21 gilt: 1,4 ≤ dₐ/dᵢ ≤ 2,1. Entsprechend gilt für das Durchmesserverhältnis Dₐ/Dᵢ der zweiten Behandlungselemente 42, 43:
1,4 ≤ Dₐ/Dᵢ ≤ 2,1.

Die Aufbereitungsanlage 1 dient zur Entgasung von flüssigen Polymerschmelzen. Polymerschmelzen können sowohl Polymerlösungen als auch Polymersuspensionen sein. Die Polymerschmelzen werden der Aufbereitungsanlage 1 aus einem Polymerisationsreaktor zugeführt und enthalten einen hohen Anteil an unerwünschten niedermolekularen bzw. flüchtigen Bestandteilen, wie beispielsweise nicht umgesetzte Monomere, Oligomere, für die Polymerisation erforderliche Hilfsmittel, insbesondere Suspensionsmittel oder Lösungsmittel, und/oder Neben- bzw. Reaktionsprodukte.

Die Polymerschmelze wird mittels der Schmelzepumpe 33 der ersten Entgasungseinheit 29 unter Druck zugeführt. Die Polymerschmelze weist vor dem Eintritt in die erste Entgasungseinheit 29 beispielsweise einen Anteil an flüchtigen Bestandteilen von 10 bis 80 Gew.-% auf. Die Polymerschmelze wird in der Entgasungseinheit 29 durch die Löcher 32 der Lochplatte 30 gepresst, so dass in dem Freiraum 31 Polymerschmelze-Stränge gebildet werden, die eine größere Oberfläche aufweisen als die Polymerschmelze vor dem Durchtritt durch die Lochplatte 30. Aufgrund der geänderten und größeren Oberfläche können aus der Polymerschmelze niedermolekulare Bestandteile austreten und über die Entgasungsöffnung 26 der Entgasungszone 24 aus der Entgasungseinheit 29 und dem ersten Extruder 2 entweichen. Die Steuereinheit 11 steuert die Antriebsmotoren 5 und 34 derart, dass der Freiraum 31 höchstens teilgefüllt ist und sich die erwähnten Polymerschmelze-Stränge bilden können.

Die aus der Entgasungseinheit 29 austretende Polymerschmelze wird dem ersten Extruder 2 zugeführt. Die Steuereinheit 11 steuert den Antriebsmotor 5 derart, dass die ersten Wellen 15, 16 gleichsinnig mit einer im Wesentlichen konstanten ersten Drehzahl n₁ von 200 bis 1 800 min⁻¹, insbesondere von 300 bis 1 500 min⁻¹, und insbesondere von 400 bis 1 200 min⁻¹ angetrieben werden. Die Polymerschmelze wird in Förderrichtung 3 durch die Einzugszone 23, die Entgasungszone 25 und die Förderzone 28 gefördert, wobei mittels der ersten Behandlungselemente 20, 21, insbesondere der ersten Knetelemente 21, die Oberfläche der Polymerschmelze kontinuierlich verändert wird, so dass flüchtige Bestandteile aus der Polymerschmelze austreten und durch die Entgasungsöffnungen 26, 27 entweichen können. Der hieraus resultierende Energieverlust wird mittels der Knetelemente 21 wieder in die Polymerschmelze eingebracht, wobei mittels der einstellbaren Drossel 51 bei unveränderter Drehzahl n₁ der ersten Wellen 15, 16 der Energieeintrag eingestellt und gesteuert werden kann. Da die Polymerschmelze beim Eintritt in den ersten Extruder 2 eine niedrige Viskosität aufweist, also dünnflüssig ist, verhindert die Drossel 51 zudem ein aufgrund der niedrigen Viskosität zu schnelles Austreten der Polymerschmelze aus dem ersten Extruder 2.

Die Viskosität der Polymerschmelze erhöht sich aufgrund der ausgetretenen niedermolekularen Bestandteile. Die Polymerschmelze wird also zähflüssiger. Beim Austritt aus dem ersten Extruder 2 weist diese beispielsweise einen Anteil an flüchtigen Bestanteilen von 2 bis 20 Gew.-% auf. In der Förderzone 28 erfolgt ein Druckaufbau, so dass die Polymerschmelze unter Druck der zweiten Entgasungseinheit 48 zugeführt wird. Die Funktionsweise der zweiten Entgasungseinheit 48 entspricht der der ersten Entgasungseinheit 29. Aus der Polymerschmelze austretende flüchtige Bestandteile können über die Entgasungsöffnung 61 der Entgasungszone 58 entweichen. Alternativ können die Entgasungseinheiten 29, 48 eigene Entgasungsöffnungen aufweisen. Die Steuereinheit 11 steuert den Antriebsmotor 8 derart, dass der zweite Freiraum 55 höchstens teilgefüllt ist, so dass sich die Polymerschmelze-Stränge ausbilden können.

Nach dem Austritt der Polymerschmelze aus der zweiten Entgasungseinheit 48 wird diese dem zweiten Extruder 4 im Wesentlichen drucklos zugeführt. Aufgrund der höheren Viskosität der Polymerschmelze steuert die Steuereinheit 11 den Antriebsmotor 8 derart an, dass die zweiten Wellen 40, 41 mit einer zweiten Drehzahl n₂ angetrieben werden, die im Vergleich zu der ersten Drehzahl n₁ niedriger ist. Da der Durchsatz der Extruder 2 und 4, nach Abzug der Massenanteile der flüchtigen bzw. entgasten Bestandteile, im Wesentlichen gleich sein muss, wird der zweite Extruder 4 in Abhängigkeit des Verhältnisses der Außendurchmesser dₐ/Dₐ mit einer zweiten Drehzahl n₂ betrieben, die mindestens dreimal, insbesondere mindestens viermal, und insbesondere mindestens fünfmal niedriger als die erste Drehzahl n₁ ist. Die Steuereinheit 11 steuert den Antriebsmotor 8 derart an, dass die zweiten Wellen 40, 41 mit einer zweiten Drehzahl n₂ von 20 bis 600 min⁻¹, insbesondere von 50 bis 450 min⁻¹, und insbesondere von 100 bis 300 min⁻¹ angetrieben werden. Durch die niedrigere Drehzahl n₂ wird verhindert, dass die Polymerschmelze in dem zweiten Extruder 4 aufgrund der höheren Viskosität und des damit verbundenen höheren Energieeintrages thermisch geschädigt wird. Die Drehzahl der zweiten Wellen 40, 41 wird vorzugsweise gesteuert bzw. geregelt.

Die Polymerschmelze wird in dem zweiten Extruder 4 in Förderrichtung 3 durch die Einzugszone 57 und die zweiten Entgasungszonen 59 und 60 gefördert. In den Entgasungszonen 59, 60 wird mittels der Behandlungselemente 42, 43, insbesondere der Knetelemente 43, die Oberfläche der Polymerschmelze kontinuierlich verändert und erneuert, so dass in der Polymerschmelze noch enthaltene flüchtige Bestandteile aus dieser austreten und durch die Entgasungsöffnungen 61, 62, 63 entweichen können. Der damit verbundene Energieverlust wird mittels der Behandlungselemente 42, 43 wieder der Polymerschmelze zugeführt.

Nach dem Austritt der Polymerschmelze aus dem zweiten Extruder 4 weist diese einen Anteil an niedermolekularen Bestandteilen von beispielsweise weniger als 10 000 ppm und insbesondere von weniger als 5 000 ppm auf. Durch den zweitstufigen Aufbau der Aufbereitungsanlage 1 kann somit eine hohe Entgasungsleistung in Verbindung mit einem hohen Polymerdurchsatz erzielt werden. Der Polymerdurchsatz liegt beispielsweise bei einem Außendurchmesser dₐ = 133 mm und einer Drehzahl n₁ = 600 min⁻¹ sowie einem Außendurchmesser Dₐ = 250 mm und einer Drehzahl n₂ = 200 min⁻¹ bei ca. 4 bis 6 t/h. Mit der Aufbereitungsanlage 1 kann beispielsweise eine Polymersuspension aus PMMA (Polymethylmethacrylat) und Methylmethacrylat mit einem Anteil von 50 Gew.-% entgast werden. Weiterhin kann synthetischer Kautschuk entgast werden, wie beispielsweise eine Polymerlösung aus Styrol-Butadien-Rubber mit einem Anteil an Hexan und/oder Cyclohexan als Lösungsmittel von 20 bis 90 Gew.-%.

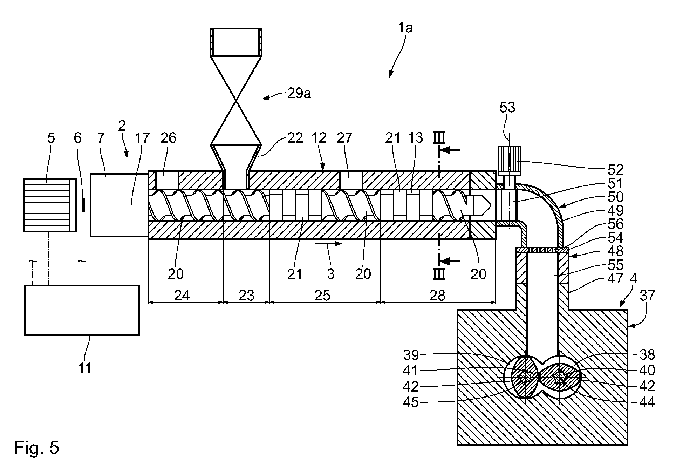

Nachfolgend wird unter Bezugnahme auf Fig. 5 ein zweites Ausfühningsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a. Der wesentliche Unterschied zu dem ersten Ausführungsbeispiel ist, dass die erste Entgasungseinheit 29a als Entspannungseinheit ausgebildet ist, so dass die Polymerschmelze beim Durchführen durch die Entgasungseinheit 29a entspannt wird und flüchtige Bestandteile von der Polymerschmelze getrennt werden. Eine derartige Entgasungseinheit 29a wird auch als Flash-Ventil bezeichnet und ist in Fig. 5 schematisch dargestellt. Der Aufbau der Entgasungseinheit 29a ist grundsätzlich bekannt und üblich. Die Zuführung der Polymerschmelze kann entsprechend dem ersten Ausführungsbeispiel mittels einer Schmelzepumpe 33 erfolgen. Hinsichtlich der weiteren Funktionsweise wird auf das erste Ausführungsbeispiel verwiesen.

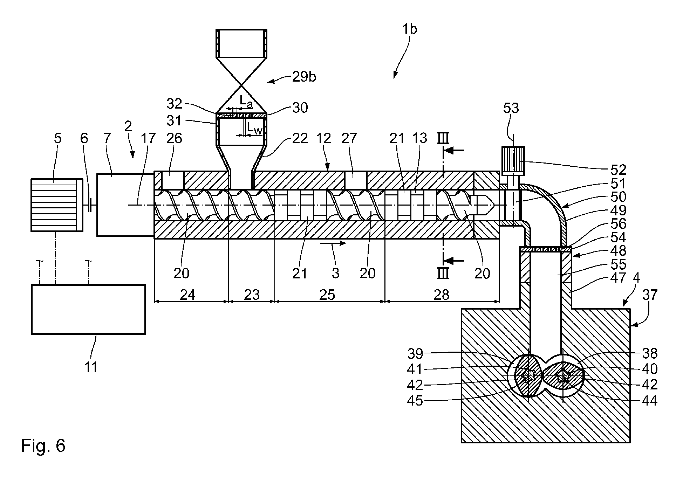

Nachfolgend wird unter Bezugnahme auf Fig. 6 ein drittes Ausfühningsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten b. Der wesentliche Unterschied zu dem ersten Ausführungsbeispiel ist, dass die erste Entgasungseinheit 29b zusätzlich zu der durch die Lochplatte 30 und den Freiraum 31 gebildeten Strang-Entgasungseinheit eine Entspannungseinheit in Form eines Flash-Ventils umfasst. Das Flash-Ventil ist in Fig. 6 schematisch dargestellt. Hinsichtlich des Aufbaus und der Funktionsweise des Flash-Ventils wird auf das zweite Ausführungsbeispiel verwiesen. Die Polymerschmelze wird beim Durchführen durch die Entgasungseinheit 29b mittels des Flash-Ventils in die Strang-Entgasungseinheit hinein entspannt, wodurch eine optimale Trennung flüchtiger Bestandteile von der Polymerschmelze erzielt wird. Die Zuführung der Polymerschmelze kann entsprechend dem ersten Ausführungsbeispiel mit einer Schmelzepumpe 33 erfolgen. Hinsichtlich der weiteren Funktionsweise wird auf die vorangegangenen Ausführungsbeispiele verwiesen.

## Patentansprüche

1. Verfahren zur Entgasung von Polymerschmelzen, umfassend die folgenden Schritte:
- Bereitstellen einer Aufbereitungsanlage (1; 1a; 1b) mit
-- einem ersten Extruder (2), der
--- mehrere drehantreibbare erste Wellen (15, 16) mit daran angeordneten ersten Behandlungselementen (20, 21) und
--- mehrere erste Entgasungszonen (24, 25) mit ersten Entgasungsöffnungen (26, 27) aufweist,
-- einem dem ersten Extruder (2) in einer Förderrichtung (3) nachgeordneten zweiten Extruder (4), der
--- mehrere drehantreibbare zweite Wellen (40, 41) mit daran angeordneten zweiten Behandlungselementen (42, 43) aufweist, wobei der Außendurchmesser (dₐ) der ersten Behandlungselemente (20, 21) kleiner als der Außendurchmesser (Dₐ) der zweiten Behandlungselemente (42, 43) ist, und
--- mehrere zweite Entgasungszonen (58, 59, 60) mit zweiten Entgasungsöffnungen (61, 62, 63) aufweist,
-- einer die Extruder (2, 4) verbindenden Übergabezone (50),
-- einer in der Übergabezone (50) angeordneten Entgasungseinheit (48), wobei die Entgasungseinheit (48) eine Lochplatte (54) und einen in Förderrichtung (3) nachgeordneten Freiraum (55) aufweist, und
-- einer einstellbaren Drossel (51), die in Förderrichtung (3) der Entgasungseinheit (48) vorgeordnet und in der Übergabezone (50) angeordnet ist,
- Zuführen einer Polymerschmelze in den ersten Extruder (2), wobei dieser mit einer ersten Drehzahl (n₁) der ersten Wellen (15, 16) derart betrieben wird, dass flüchtige Bestandteile aus der Polymerschmelze durch die ersten Entgasungsöffnungen (26, 27) entweichen und die Polymerschmelze zähflüssiger wird, wobei der Energieeintrag in die Polymerschmelze in dem ersten Extruder (2) mittels der einstellbaren Drossel (51) veränderbar ist,
- Zuführen der zähflüssigeren Polymerschmelze unter Druck in die Entgasungseinheit (48), wobei die Polymerschmelze nach dem Durchführen durch die Lochplatte (54) im höchstens teilgefüllten Freiraum (55) eine größere Oberfläche hat und flüchtige Bestandteile von der Polymerschmelze getrennt werden, wobei diese weiteren flüchtigen Bestandteile aus der Polymerschmelze entweichen, und
- Zuführen der aus der Entgasungseinheit (48) austretenden Polymerschmelze in den zweiten Extruder (4), wobei dieser mit einer zweiten und im Vergleich zu der ersten Drehzahl (n₁) niedrigeren Drehzahl (n₂) der zweiten Wellen (40, 41) derart betrieben wird, dass weitere flüchtige Bestandteile aus der Polymerschmelze durch die zweiten Entgasungsöffnungen (61, 62, 63) entweichen.

2. Verfahren nach Anspruch 1, **dadurch gekennzeichnet, dass** die Polymerschmelze vor dem Eintritt in den ersten Extruder (2) unter Druck einer weiteren Entgasungseinheit (29; 29a; 29b) zugeführt wird.

3. Verfahren nach Anspruch 2, **dadurch gekennzeichnet, dass** der Druck zum Zuführen der Polymerschmelze mittels einer der weiteren Entgasungseinheit (29; 29a; 29b) in Förderrichtung (3) vorgeordneten Schmelzepumpe (33) erzeugt wird.

4. Verfahren nach Anspruch 2 oder 3, **dadurch gekennzeichnet, dass** die weitere Entgasungseinheit (29; 29b) eine Lochplatte (30) und einen in Förderrichtung (3) nachgeordneten Freiraum (31) aufweist, so dass die Polymerschmelze nach dem Durchführen durch die Lochplatte (30) im höchstens teilgefüllten Freiraum (31) eine größere Oberfläche hat und flüchtige Bestandteile von der Polymerschmelze getrennt werden.

5. Verfahren nach einem der Ansprüche 2 bis 4, **dadurch gekennzeichnet, dass** die weitere Entgasungseinheit (29a; 29b) als Entspannungseinheit ausgebildet ist, so dass die Polymerschmelze beim Durchführen durch die Entgasungseinheit (29a; 29b) entspannt und niedermolekulare Bestandteile von der Polymerschmelze getrennt werden.

6. Verfahren nach einem der Ansprüche 1 bis 5, **dadurch gekennzeichnet, dass** die in der mindestens einen Entgasungseinheit (29, 48; 29a, 48; 29b, 48) abgetrennten flüchtigen Bestandteile durch eine Entgasungsöffnung (26, 61) einer der Entgasungszonen (24, 58) entweichen.

7. Verfahren nach einem der Ansprüche 1 bis 6, **dadurch gekennzeichnet, dass** die zweite Drehzahl (n₂) mindestens dreimal, insbesondere mindestens viermal, und insbesondere mindestens fünfmal niedriger als die erste Drehzahl (n₁) ist.

8. Verfahren nach einem der Ansprüche 1 bis 7, **dadurch gekennzeichnet, dass** die ersten Wellen (15, 16) mit einer ersten Drehzahl (n₁) von 200 bis 1800 min⁻¹, insbesondere von 300 bis 1500 min⁻¹, und insbesondere von 400 bis 1200 min⁻¹ angetrieben werden.

9. Verfahren nach einem der Ansprüche 1 bis 8, **dadurch gekennzeichnet, dass** die zweiten Wellen (40, 41) mit einer zweiten Drehzahl (n₂) von 20 bis 600 min⁻¹, insbesondere von 50 bis 450 min⁻¹, und insbesondere von 100 bis 300 min⁻¹ angetrieben werden.

10. Verfahren nach einem der Ansprüche 1 bis 9, **dadurch gekennzeichnet, dass** für das Verhältnis des Außendurchmessers (dₐ) der ersten Behandlungselemente (20, 21) zu dem Außendurchmesser (Dₐ) der zweiten Behandlungselemente (42, 43) gilt: 0,3 ≤ dₐ/Dₐ < 1,0, insbesondere 0,3 ≤ dₐ/Dₐ ≤ 0,8 und insbesondere 0,5 ≤ dₐ/Dₐ ≤ 0,8.

11. Verfahren nach einem der Ansprüche 1 bis 10, **dadurch gekennzeichnet, dass** die ersten Wellen (15, 16) und/oder die zweiten Wellen (40, 41) gleichsinnig drehangetrieben werden.

12. Aufbereitungsanlage zur Entgasung von Polymerschmelzen mit
- einem ersten Extruder (2), der mehrere drehantreibbare erste Wellen (15, 16) mit daran angeordneten ersten Behandlungselementen (20, 21) aufweist,
- einem dem ersten Extruder (2) in einer Förderrichtung (3) nachgeordneten zweiten Extruder (4), der mehrere drehantreibbare zweite Wellen (40, 41) mit daran angeordneten zweiten Behandlungselementen (42, 43) aufweist,
- einer Steuereinheit (11),
- einer die Extruder (2, 4) verbindenden Übergabezone (50),
- einer in der Übergabezone (50) angeordneten Entgasungseinheit (48), die eine Lochplatte (54) und einen in Förderrichtung (3) nachgeordneten Freiraum (55) derart aufweist, dass die Polymerschmelze nach dem Durchführen durch die Lochplatte (54) im höchstens teilgefüllten Freiraum (55) eine größere Oberfläche hat und flüchtige Bestandteile von der Polymerschmelze getrennt werden, und
- einer in der Übergabezone (50) angeordneten und der Entgasungseinheit (48) in der Förderrichtung (3) vorgeordneten Drossel (51), deren Stellung mittels der Steuereinheit (11) einstellbar ist **dadurch gekennzeichnet, dass**
- der erste Extruder (2) mehrere erste Entgasungszonen (24, 25) mit ersten Entgasungsöffnungen (26, 27) für in einer Polymerschmelze enthaltene flüchtige Bestandteile aufweist,
- der zweite Extruder (4) mehrere zweite Entgasungszonen (58, 59, 60) mit zweiten Entgasungsöffnungen (61, 62, 63) für in der Polymerschmelze enthaltene weitere flüchtige Bestandteile aufweist,
- der Außendurchmesser (dₐ) der ersten Behandlungselemente (20, 21) kleiner als der Außendurchmesser (Dₐ) der zweiten Behandlungselemente (42, 43) ist, und
- die Steuereinheit (11) derart ausgebildet ist, dass eine zweite Drehzahl (n₂) der zweiten Wellen (40, 41) niedriger als eine erste Drehzahl (n₁) der ersten Wellen (14, 15) ist.

13. Aufbereitungsanlage nach Anspruch 12, **dadurch gekennzeichnet, dass** dem ersten Extruder (2) in Förderrichtung (3) eine weitere Entgasungseinheit (29; 29a; 29b) vorgeordnet ist.

## Claims

1. Method for the devolatilization of polymer melts comprising the following steps:
- providing a processing installation (1; 1a; 1b) comprising
-- a first extruder (2) which comprises
--- several rotatably drivable first shafts (15, 16) which are provided with first treatment members (20, 21); and
--- several first devolatilization zones (24, 25) with first devolatilization ports (26, 27);
-- a second extruder (4) arranged downstream of the first extruder (2) in a direction of conveyance (3) which
--- comprises several rotatably drivable second shafts (40, 41) which are provided with second treatment members (42, 43), with the external diameter (dₐ) of the first treatment members (20, 21) being smaller than the external diameter (Dₐ) of the second treatment members (42, 43); and
--- several second devolatilization zones (58, 59, 60) with second devolatilization ports (61, 62, 63);
-- a transfer zone (50) which interconnects the extruders (2, 4);
-- a devolatilization unit (48) which is arranged in the transfer zone (50), the devolatilization unit (48) having a perforated plate (54) and a clearance (55) arranged downstream thereof in the direction of conveyance (3); and
-- an adjustable throttle (51) arranged upstream of the devolatilization unit (48) in the direction of conveyance (3) and arranged in the transfer zone (50);
- supplying a polymer melt to the first extruder (2), with the first extruder (2) being operated at a first speed (n₁) of the first shafts (15, 16) in such a way that volatile components escape from the polymer melt via the first devolatilization ports (26, 27) so that the polymer melt becomes more viscous, the energy input into the polymer melt in the first extruder (2) being adjustable using the adjustable throttle (51);
- supplying the more viscous polymer melt under pressure to the devolatilization unit (48), the polymer melt having a larger surface area in the no more than partially filled clearance (55) after passing through the perforated plate (54), with volatile components being separated from the polymer melt and these volatile components escaping from the polymer melt; and
- supplying the polymer melt being discharged from the devolatilization unit (48) to the second extruder (4), with the second extruder (4) being operated at a second speed (n₂) of the second shafts (40, 41), which is lower than the first speed (n₁), in such a way that other volatile components escape from the polymer melt via the second devolatilization ports (61, 62, 63).

2. Method according to claim 1, **characterized in that** the polymer melt is supplied under pressure to an additional devolatilization unit (29; 29a; 29b) prior to entering the first extruder (2).

3. Method according to claim 2, **characterized in that** the pressure for supplying the polymer melt is generated using a melt pump (33) which is arranged upstream of the additional devolatilization unit (29; 29a; 29b) in the direction of conveyance (3).

4. Method according to claim 2 or 3, **characterized in that** the additional devolatilization unit (29, 48; 29b, 48) has a perforated plate (30) and a clearance (31) arranged downstream thereof in the direction of conveyance (3) so that the polymer melt has a larger surface area in the no more than partially filled clearance (31) after passing through the perforated plate (30) and volatile components are separated from the polymer melt.

5. Method according to one of claims 2 to 4, **characterized in that** the additional devolatilization unit (29a; 29b) is configured as a pressure-relief unit so that the polymer melt is pressure-relieved when passing through the devolatilization unit (29a; 29b) and low-molecular components are separated from the polymer melt.

6. Method according to one of claims 1 to 5, **characterized in that** the volatile components separated in the at least one devolatilization unit (29, 48; 29a, 48; 29b; 48) escape via a devolatilization port (26, 61) of one of the devolatilization zones (24, 58).

7. Method according to one of claims 1 to 6, **characterized in that** the second speed (n₂) is at least three times, in particular at least four times and in particular at least five times lower than the first speed (n₁).

8. Method according to one of claims 1 to 7, **characterized in that** the first shafts (15, 16) are driven at a first speed (n₁) of 200 to 1800 min⁻¹, in particular of 300 to 1500 min⁻¹, and in particular of 400 to 1200 min⁻¹.

9. Method according to one of claims 1 to 8, **characterized in that** the second shafts (40, 41) are driven at a second speed (n₂) of 20 to 600 min⁻¹, in particular of 50 to 450 min⁻¹, and in particular of 100 to 300 min⁻¹.

10. Method according to one of claims 1 to 9, **characterized in that** the ratio of the external diameter (dₐ) of the first treatment members (20, 21) to the external diameter (Dₐ) of the second treatment members (42, 43) is such that 0.3 ≤ dₐ/Dₐ < 1.0, in particular 0.3 ≤ dₐ/Dₐ ≤ 0.8, and in particular 0.5 ≤ dₐ/ Dₐ ≤ 0.8.

11. Method according to one of claims 1 to 10, **characterized in that** the first shafts (15, 16) and/or the second shafts (40, 41) are driven equidirectionally.

12. Processing installation for the devolatilization of polymer melts comprising
- a first extruder (2) which has several rotatably drivable first shafts (15, 16) which are provided with first treatment members (20, 21);
- a second extruder (4) arranged downstream of the first extruder (2) in a direction of conveyance (3), the second extruder (4) having several rotatably drivable second shafts (40, 41) which are provided with second treatment members (42, 43);
- a control unit (11)
- a transfer zone (50) which interconnects the extruders (2, 4);
- a devolatilization unit (48) arranged in the transfer zone (50) which has a perforated plate (54) and a clearance (55) arranged downstream thereof in the direction of conveyance (3) such that the polymer melt has a larger surface area in the no more than partially filled clearance (55) after passing through the perforated plate (54), and volatile components are separated from the polymer melt; and
- a throttle (51) arranged in the transfer zone (50) upstream of the devolatilization unit (48) when seen in the direction of conveyance (3), the position of the throttle (51) being adjustable by means of the control unit (11),
**characterized in that**
- the first extruder (2) has several first devolatilization zones (24, 25) with first devolatilization ports (26, 27) for volatile components contained in a polymer melt;
- the second extruder (4) has several second devolatilization zones (58, 59, 60) with several second devolatilization port (61, 62, 63) for other volatile components contained in the polymer melt;
- the external diameter (dₐ) of the first treatment members (20, 21) is smaller than the external diameter (Dₐ) of the second treatment members (42, 43), and
- the control unit (11) is configured in such a way that a second speed (n₂) of the second shafts (40, 41) is lower than a first speed (n₁) of the first shafts (14, 15).

13. Processing installation according to claim 12, **characterized in that** another devolatilization unit (29; 29a; 29b) is arranged upstream of the first extruder (2) in the direction of conveyance (3).

## Revendications

1. Procédé pour le dégazage de polymères fondus comprenant les étapes suivantes :
- mise au point d'une installation de préparation (1 ; 1a ; 1b) comprenant
-- une première extrudeuse (2) qui présente
--- plusieurs premiers arbres (15, 16), pouvant être entraînés en rotation, comportant des premiers éléments de traitement (20, 21) y étant disposés, et
--- plusieurs premières zones (24, 25) de dégazage comportant des premiers orifices (26, 27) de dégazage,
-- une deuxième extrudeuse (4), disposée après la première extrudeuse (2) dans le sens du transport (3) qui présente
--- plusieurs deuxièmes arbres (40, 41) pouvant être entraînés en rotation, comportant des deuxièmes éléments de traitement (42, 43) y étant disposés, le diamètre extérieur (dₐ) des premiers éléments de traitement (20, 21) étant inférieur au diamètre extérieur (Dₐ) des deuxièmes éléments de traitement (42, 43),
et
--- plusieurs deuxièmes zones (58, 59, 60) de dégazage comportant des deuxièmes orifices (61, 62, 63) de dégazage,
-- une zone de transfert (50) reliant les extrudeuses (2, 4),
-- une unité de dégazage (48) disposée dans la zone de transfert (50), l'unité de dégazage (48) présentant une plaque perforée (54) et un espace libre (55) disposé après dans le sens du transport (3) et
-- un ralentisseur (51) réglable qui est placé en avant de l'unité de dégazage (48) dans le sens du transport (3) et disposé dans la zone de transfert (50),
- alimentation des polymères fondus dans la première extrudeuse (2), celle-ci étant entraînée avec un premier nombre de tours (n₁) du premier arbre (15, 16) de telle sorte que des constituants volatils des polymères fondus s'échappent par les orifices (26, 27) de dégazage et que les polymères fondus deviennent très visqueux, l'apport d'énergie dans les polymères fondus dans la première extrudeuse (2) pouvant être modifié au moyen du ralentisseur (51) réglable,
- alimentation des polymères fondus très visqueux dans l'unité de dégazage (48), les polymères fondus présentant une surface supérieure après le passage à travers la plaque perforée (54) dans l'espace libre (55) tout au plus partiellement rempli et des constituants volatils étant séparés des polymères fondus, ces nouveaux constituants volatils s'échappant des polymères fondus, et
- alimentation des polymères fondus sortant de l'unité de dégazage (48) dans la deuxième extrudeuse (4), celle-ci étant entraînée avec un deuxième nombre de tours (n₂) du deuxième arbre (40, 41) inférieur en comparaison avec le premier nombre de tours (n₁) de telle sorte que de nouveaux constituants volatils s'échappent des polymères fondus à travers les deuxièmes orifices (61, 62, 63) de dégazage.

2. Procédé selon la revendication 1, **caractérisé en ce que** les polymères fondus sont amenés sous pression dans une unité de dégazage supplémentaire (29 ; 29a ; 29b) avant l'entrée dans la première extrudeuse (2).

3. Procédé selon la revendication 2, **caractérisé en ce que** la pression pour l'alimentation des polymères fondus est générée au moyen d'une pompe (33) pour de la matière fondue disposée avant l'unité de dégazage supplémentaire (29 ; 29a ; 29b) dans le sens du transport (3).

4. Procédé selon les revendications 2 ou 3, **caractérisé en ce que** l'unité de dégazage supplémentaire (29 ; 29b) présente une plaque perforée (30) et un espace libre (31) disposé après dans le sens du transport (3) de sorte que les polymères fondus présentent une surface supérieure dans l'espace libre (31) tout au plus partiellement rempli après le passage à travers la plaque perforée (30) et que des constituants volatils sont séparés des polymères fondus.

5. Procédé selon l'une des revendications 2 à 4, **caractérisé en ce que** l'unité de dégazage supplémentaire (29a ; 29b) est conçue comme une unité de détente de sorte que les polymères fondus sont détendus lors du passage à travers l'unité de dégazage (29a ; 29b) et que des constituants de faible masse moléculaire sont séparés des polymères fondus.

6. Procédé selon l'une des revendications 1 à 5, **caractérisé en ce que** les constituants volatils séparés dans au moins une unité de dégazage (29, 48 ; 29a, 48 ; 29b, 48) s'échappent par un orifice de dégazage (26, 61) de l'une des zones de dégazage (24, 58).

7. Procédé selon l'une des revendications 1 à 6, **caractérisé en ce que** le deuxième nombre de tours (n₂) est au moins trois fois, notamment au moins quatre fois, et en particulier, au moins cinq fois inférieur au premier nombre de tours (n₁).

8. Procédé selon l'une des revendications 1 à 7, **caractérisé en ce que** les premiers arbres (15, 16) sont entraînés avec un premier nombre de tours (n₁) de 200 à 1800 min⁻¹, notamment de 300 à 1500 min⁻¹, et en particulier, de 400 à 1200 min⁻¹.

9. Procédé selon l'une des revendications 1 à 8, **caractérisé en ce que** les deuxièmes arbres (40, 41) sont entraînés avec un deuxième nombre de tours (n₂) de 20 à 600 min⁻¹, notamment de 50 à 450 min⁻¹, et en particulier, de 100 à 300 min⁻¹.

10. Procédé selon l'une des revendications 1 à 9, **caractérisé en ce que**, pour le rapport du diamètre extérieur (dₐ) des premiers éléments de traitement (20, 21) sur le diamètre extérieur (Dₐ) des deuxièmes éléments de traitement (42, 43), on a 0,3 ≤ dₐ/Dₐ < 1,0, notamment, 0,3 ≤ dₐ/Dₐ < 0,8 et particulièrement, 0,5 ≤ dₐ/Dₐ < 0,8.

11. Procédé selon l'une des revendications 1 à 10, **caractérisé en ce que** les premiers arbres (15, 16) et/ou les deuxièmes arbres (40, 41) sont entraînés en rotation dans le même sens.

12. Installation de préparation pour le dégazage de polymères fondus comprenant
- une première extrudeuse (2) qui présente plusieurs premiers arbres (15, 16) pouvant être entraînés en rotation avec des premiers éléments de traitement (20, 21) y étant logés,
- une deuxième extrudeuse (4) disposée après la première extrudeuse (2) dans un sens de transport (3) qui présente plusieurs deuxièmes arbres (40, 41) pouvant être entraînés en rotation avec des deuxièmes éléments de traitement (42, 43) qui y sont disposés,
- une unité de commande (11),
- une zone de transfert (50) reliant les extrudeuses (2, 4),
- une unité de dégazage (48) disposée dans la zone de transfert (50) qui présente une plaque perforée (54) et un espace libre (55) disposé après dans un sens de transport (3) de telle sorte que les polymères fondus présentent une surface supérieure dans l'espace libre (55) tout au plus partiellement rempli après la traversée de la plaque perforée (54) et que des constituants volatils sont séparés des polymères fondus, et
- un ralentisseur (51), logé dans la zone de transfert (50) et disposé avant l'unité de dégazage (48) dans le sens de transport (3), dont la position peut être réglée au moyen de l'unité de réglage (11), **caractérisée en ce que**
- la première extrudeuse (2) présente plusieurs premières zones de dégazage (24, 25) avec des premiers orifices de dégazage (26, 27) pour des constituants volatils contenus dans les polymères fondus,
- la deuxième extrudeuse (4) présente plusieurs deuxièmes zones de dégazage (58, 59, 60) avec des deuxièmes orifices de dégazage (61, 62, 63) pour d'autres constituants volatils contenus dans les polymères fondus,
- le diamètre extérieur (dₐ) des premiers éléments de traitement (20, 21) est inférieur au diamètre extérieur (Dₐ) des deuxièmes éléments de traitement (42, 43), et
- l'unité de commande (11) est conçue de telle manière qu'un deuxième nombre de tours (n₂) des deuxièmes arbres (40, 41) est inférieur à un premier nombre de tours (n₁) des premiers arbres (14, 15).

13. Installation de préparation selon la revendication 12, **caractérisée en ce qu'**une unité de dégazage (29 ; 29a ; 29b) supplémentaire est disposée avant la première extrudeuse (2) dans le sens du transport (3).
